Europäisches Patentamt

European Patent Office

Office européen des brevets

(11) Publication number: 0 340 383
A1

## (12) EUROPEAN PATENT APPLICATION

(21) Application number: 89100816.1

(51) Int. Cl.4: A21C 3/02

(22) Date of filing: 18.01.89

(30) Priority: 27.04.88 US 186949
07.09.88 US 242043

(43) Date of publication of application:
08.11.89 Bulletin 89/45

(84) Designated Contracting States:
DE ES FR GB IT

(71) Applicant: ELECTRA FOOD MACHINERY, INC.
11312 Orchard Street
El Monte California 91731(US)

(72) Inventor: Rubio, Manuel J.
1621 Collins Avenue Apt. 1002
Miami Beach Florida(US)
Inventor: Palacios, Alfredo
Rosario Castellanos No. 1923 Contry Sol. 40
Sector Guadalupe, N.L. C.P. 67150(MX)
Inventor: de La Vega, Alberto
Amazonas No. 101 Pte. Col. Del Valle
Garza Garcia, N.L. C.P. 66220(MX)

(74) Representative: Patentanwälte Deufel- Schön-
Hertel- Lewald- Otto
Isartorplatz 6
D-8000 München 2(DE)

(54) Sheeting apparatus.

(57) An apparatus for making tortillas and tortilla chips comprising a front roller (18) rotating in a first direction, a rear roller (20) disposed adjacent the front roller (18) and rotating in the opposite direction, a hopper (36) for continuously delivering masa dough to the rollers and a drive mechanism for driving the rollers in a manner such that the surface speed of the front roller is always greater than the surface speed of the rear roller, whereby the masa dough will cleanly separate from the rear roller and adhere to the front roller.

FIG. 6

## Background of The Invention

This is a Continuation-In-Part of Copending Application Serial Number 186,949 filed April 27, 1988.

### Field of The Invention

The present invention relates generally to apparatus for processing foods. More particularly the invention concerns an apparatus for forming uncooked tortillas and tortilla chips from a pliable corn flour, or masa, dough.

### Discussion of The Prior Art

The tortilla is a staple food throughout Mexico and comprises a thin, flexible, round cake made from corn flour dough, called masa. Masa is made by mixing corn flour with about an equal weight of water. Masa can also be made by steeping corn in a water and lime mixture and then grinding the corn to form the masa dough. A tortilla is made by shaping masa into a relatively thin pancake-shaped disk, which is cooked enough to cohere the product, but leave it flexible. Tortillas are made into various sizes, from a few inches in diameter up to two feet. However, most tortillas are between 3 and 9 inches in diameter.

The masa dough is sticky, somewhat difficult to form and extremely fragile. The masa dough must be formed with great care or it will tear. After forming, the tortilla must be carefully separated from the forming rollers, removed from the apparatus and then transported to a remote station for further processing.

Prior to this invention various types of apparatus for preparing tortillas and tortilla chips have been developed. A common drawback of the prior art devices is their inability to automatically produce, in a trouble-free manner, large quantities of tortillas of uniform high quality. Of particular difficulty has been the inability to develop automatic sheeting apparatus which is properly suited for reliably forming the fragile masa dough into planar sheets of uniform thickness having the proper consistency and surface characteristics for cooking.

Typically, the prior art sheeting apparatus comprised front and rear adjacently disposed rollers rotating in opposite directions at the same rate of speed. The masa dough was fed between the rollers and rolled into thin sheets. A cutting mold cooperatively associated with the front roller was then used to cut the sheeted dough adhering to the front roller into the shape desired of the end product. After cutting, the product was separated from the front roller using a pair of transversely extending stripping wires disposed adjacent the surface of the front roller. The product then fell onto a conveyer which transported it to a cooking station.

As the masa dough was fed between the rollers of the prior art devices, its sticky character undesirably caused the dough to adhere to the rear roller as well as to the front roller. To avoid this problem, a length of music wire was positioned at a strategic location close to the surface of the rear roller and drawn taut. If the wire was correctly positioned between the front and rear rollers, it would function to cleanly peel the dough from the rear roller and transfer it to the front roller. However, if the wire was too high, portions of the masa dough would adhere to the rear roller. If the wire was too low, the dough would not properly adhere to the front roller. Additionally, in order to obtain satisfactory transfer of the dough to the front roller, the wire had to be maintained very straight and taut and in close contact with the surface of the rear roller. Experience showed that this was best accomplished using a convex rear roller and a concave front roller, with the wire extending between the rollers at an angle with respect to the axial center line of the rollers.

In the prior art, in addition to the problems of improper adherence of the dough to the rear roller, if the wire was not precisely positioned relative to the roller, the masa sheet which was formed exhibited poor consistency, a rough surface and a non-uniform thickness. These characteristics presented problems during cooking and an inferior end product resulted.

Other substantial problems also existed with the prior art sheeting apparatus. For example, if the stripping wire failed, as was frequently the case, the sheeting operation had to be stopped and, because of the location of the wire, the apparatus had to be virtually disassembled to replace the wire. This was costly and time consuming. Further, the concave-convex rollers were difficult and costly to make and to replace. Also because concave-convex rollers were used, the product drop off height from the front roller varied transversely of the front roller. This frequently caused difficulties in properly depositing the uncooked segments onto the operating conveyer which conveyed the segments to the cooking station.

Another problem inherent in the use of prior art devices having the rear roller stripping wire was the undesirable roughening of the surface of the masa dough by the wire as the dough was stripped from the rear roller. This surface roughening caused difficulties in frying the tortilla and resulted in a poor quality end product.

Recognizing the many problems inherent in the prior art sheeting devices, the present inventors sought to develop an apparatus in which cylindrical rollers could be used and in which the cumbersome stripping wire could be eliminated. They reasoned that the use of cylindrical rollers would enable substantial cost savings and would permit constant product drop height from the front roller. Also, if the rear stripper wire could be eliminated, the reliability of the apparatus would be markedly improved and the cost of the sheeting operation significantly reduced. Accordingly, the present inventors investigated the use of different materials for construction of the rollers, investigated the use of anti-stick sprays and lubricants on the rollers which might prevent the masa dough from sticking to the rollers, and explored the possibility of using different types of surface finishes on the rollers to cause proper adherence of the dough to the front roller. However, these approaches were all unsuccessful.

Finally, the present inventors began experimenting with rollers of different diameters and rollers operating at different speeds of rotation. It was these experiments which yielded the totally unexpected results of the apparatus of the present invention. More particularly, it was discovered that if the relative peripheral speeds of generally cylindrically shaped rollers was carefully controlled, the masa dough could be made to adhere only to the front roller and that a very uniform sheet of dough could be produced. It was this breakthrough which enabled the design of the apparatus of the present invention and permitted the major drawbacks of the prior art sheeting apparatus to be uniquely and effectively overcome.

Summary of The Invention

It is an object of the present invention to provide an apparatus for the production of Mexican food products such as tortillas and tortilla chips in which masa dough is first rolled into a planar sheet of uniform thickness using cooperating differential speed front and rear rollers and then cut into segments of a desired end product configuration.

It is another object of the invention to provide an apparatus of the aforementioned character in which, prior to the cutting step, the masa dough is cleanly separated from the rear roller and caused to adhere to the front roller without the use of any type of stripping wire, blade or other mechanical separating device.

Another object of the invention is to provide an apparatus of the class described in which the surface, or peripheral speed of the rollers is precisely controlled in a manner to cause the masa dough to cleanly separate from the rear roller and to loosely adhere to the front roller so as to produce a planar sheet of dough having surface characteristics ideally suited for cooking to produce an end product of superior quality.

Still another object of the invention is to provide an apparatus as described in the preceding paragraphs which is easy to use, highly reliable in operation and inexpensive to manufacture and maintain.

These and other objects of the invention are realized in in apparatus for making tortillas and tortilla chips comprising a front roller rotating in a first direction, a rear roller disposed adjacent the front roller and rotating in the opposite direction, a hopper for continuously delivering masa dough to the rollers and a drive mechanism for driving the rollers in a manner such that the surface speed of the front roller is always greater than the surface speed of the rear roller.

Brief Description of The Drawings

Figure 1 is a generally diagrammatic side elevational view of a typical prior art apparatus used for sheeting masa dough and then cutting the masa dough into an end product such as a tortilla.

Figure 2 is a fragmentary top view of the apparatus shown in Figure 1 illustrating the concave-convex configuration of the continuous sheeting rollers.

Figure 3 is a fragmentary top view illustrating the configuration of the sheeting rollers of one form of the apparatus of the present invention.

Figure 3A is a fragmentary top view of an alternate form of continuous roller arrangement of the present invention.

Figure 4 is a side elevational view of one form of the apparatus of the present invention.

Figure 5 is a plan view taken along lines 5-5 of Figure 4.

Figure 6 is a view taken along lines 6-6 of Figure 5.

Figure 7 is a side elevational view of an alternate form of the sheeting apparatus of the present invention.

Figure 8 is a fragmentary cross sectional view taken along lines 8-8 of Figure 7.

Figure 9 is a side elevational view of yet another alternate form of the apparatus of the invention.

Figure 10 is a plan view taken along lines 10-10 of figure 9.

Figure 11 is a cross-sectional view taken along lines 11-11 of figure 10.

Figure 12 is a cross-sectional view taken along lines 12-12 of figure 11.

Description of The Invention

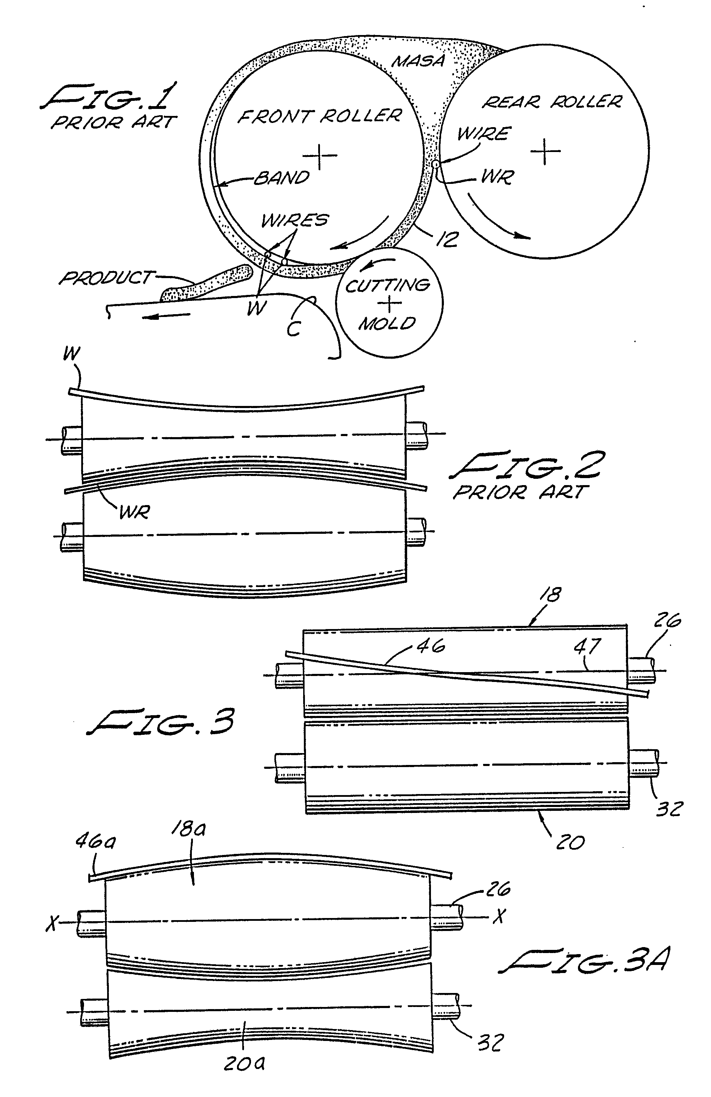

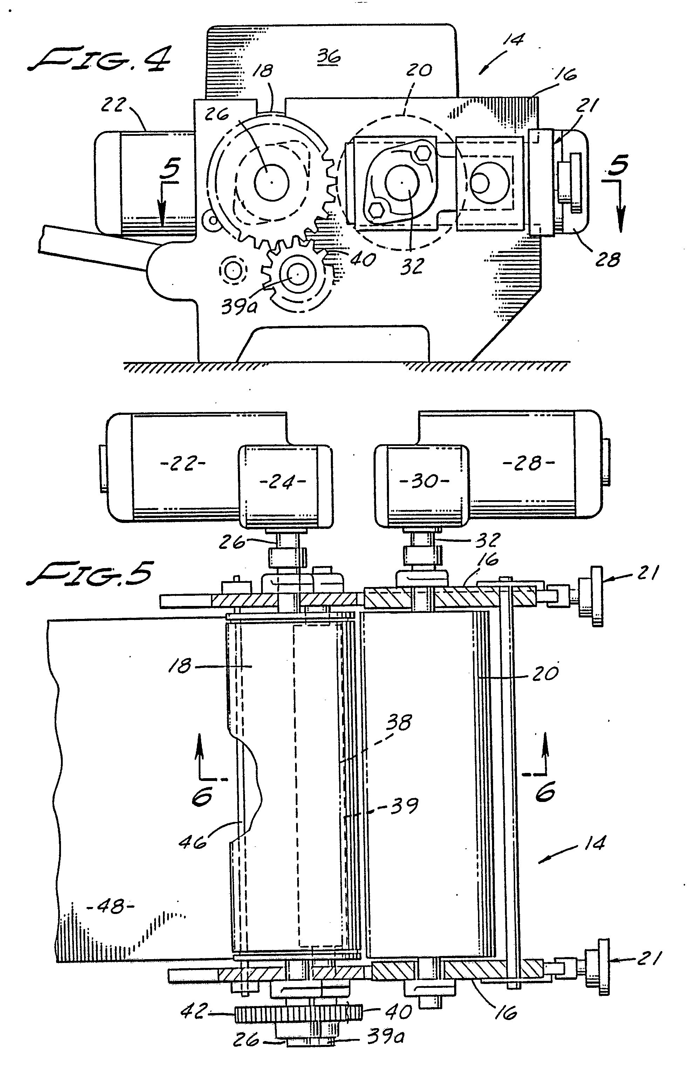

Referring to the drawings, and particularly to Figures 1 and 2, a typical prior art sheeting apparatus is there illustrated. In most instances the prior art sheeting apparatus for sheeting masa dough comprised closely spaced apart front and rear rollers rotating in opposite directions at the same rate of speed. As indicated in Figure 1, the masa dough was fed between the rollers and rolled into a thin sheet which was stripped from the rear roller and allowed to adhere to the front roller. The planar sheet is generally indicated in Figure 1 by the numeral 12. A cutting mold was cooperatively associated with the front roller and was used to cut the sheeted dough which adhered to the front roller into the shape desired of the end product. After cutting, the segments of dough were separated from the front roller using a pair of transversely extending stripping wires W disposed adjacent the surface of the front roller. As indicated in Figure 1, the product then fell on to a conveyer C which transported the product to a remote location for further processing.

In the prior art apparatus, as the masa dough was fed between the front and rear roller its sticky character undesirably caused the dough to adhere to the rear roller as well as to the front roller. To avoid this problem, a length of music wire was positioned intermediate the rollers at a strategic location close to the surface of the rear roller and drawn taunt. This wire is generally designated in Figures 1 and 2 by the letters WR. With WR correctly positioned intermediate the front and rear rollers in the manner shown in the drawings, the wire would function to peel the dough from the rear roller and transfer it to the front roller in the manner shown.

In order to obtain satisfactory transfer of the dough to the front roller, the wire WR had to be maintained very straight and in immediate contact with the surface of the rear roller. As a general rule this was best accomplished using a convex rear roller and a concave front roller of the general configuration seen in Figure 2 of the drawings.

The numerous problems inherent in apparatus of the character illustrated in Figures 1 and 2, have previously been described herein and will not now be repeated. Suffice to say that these problems caused many designers in the field to actively explore various alternative mechanisms and particularly mechanisms wherein the rear stripper wire could be eliminated. Because of the substantial difficulties in replacing the rear stripper wire in the prior art apparatus, should the wire break during operation, any type of apparatus which eliminated this undesirable component was extremely attractive. Until the present invention, however, efforts by those working in the field to eliminate this troublesome rear stripper wire have been totally unsuccessful.

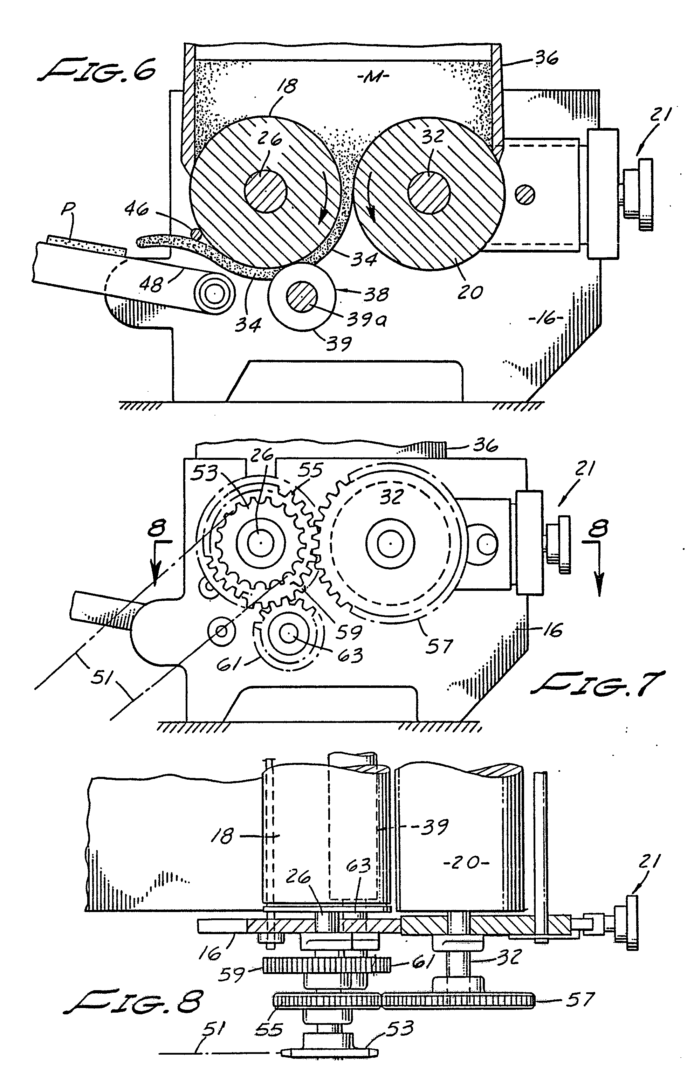

Turning now particularly to Figures 3, 4 and 5, the apparatus of the present invention is there illustrated and generally designated by the numeral 14. The embodiment of the invention shown in these Figures comprises a front, or first, generally cylindrical roller 18, rotating in a first direction, and second, or rear, generally cylindrical roller 20, rotating in a second opposite direction. The rollers are slightly spaced apart and this spacing can be controlled by adjustment means 21 of a character known in the art for controllably moving the rear roller assembly toward and away from the front roller. Drive means are provided for rotating the first and second rollers in a manner such that the surface, or peripheral speed of the first, or front, roller 18 is greater than the surface speed of the second or rear roller 20. This highly important feature of the invention will be discussed further hereinafter.

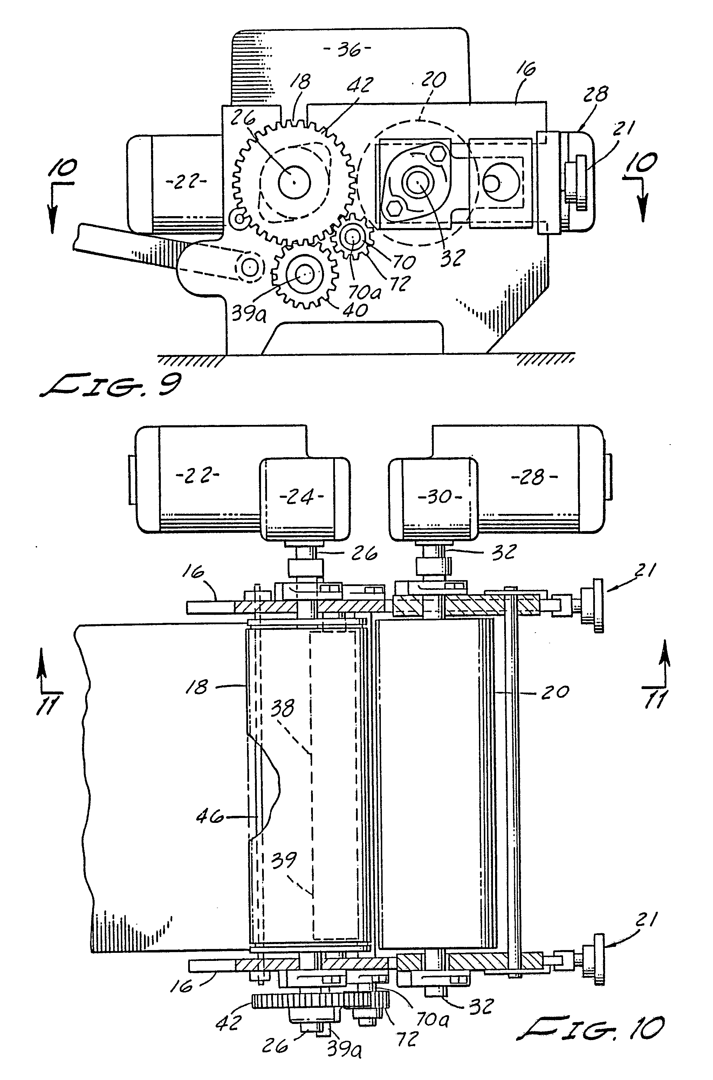

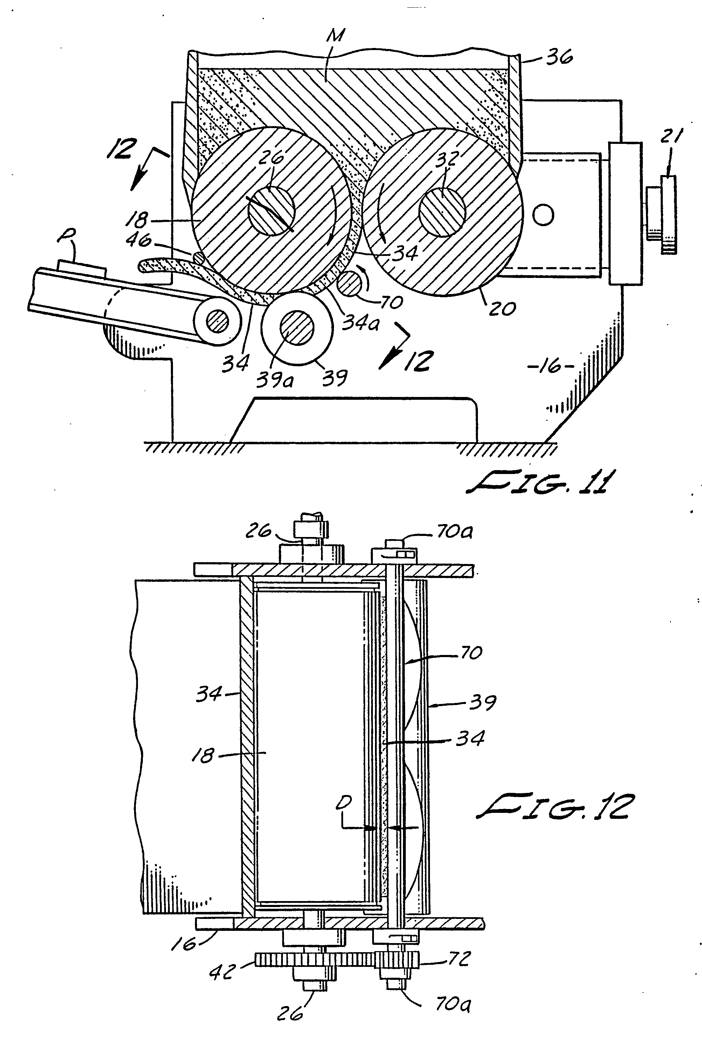

As best seen by referring to Figure 5, in the instant form of the invention the drive means comprises a first variable speed electric motor 22 connected to a suitable gear reduction unit 24 which in turn drives transverse shaft 26 of first roller 18. The drive means also comprises a second variable speed electric motor 28 connected to a second gear reduction unit 30 which in turn drives transverse shaft 32 of second or rear roller 20. With this arrangement it is apparent that variable speed motors 22 and 28 can be controlled to independently vary the speed of rotation of rollers 18 and 20 to obtain an optimum peripheral speed ratio between the two rollers. More particularly the variable speed motors permit the rate of rotation of the front roller to be varied to control product throughput. Simultaneously, the rate of rotation of the rear roller can be adjusted to accommodate slight variances in the stickiness of the dough and to insure that the optimum peripheral speed ratio between the rollers is precisely maintained.

Referring to Figure 6, another feature of the apparatus of this embodiment of the invention can be seen to comprise means for delivering masa, or corn flour, dough to the first and second rollers whereby the masa dough can be compressed between the rollers to form a thin planar sheet of dough 34. As indicated in Figure 6, this means is here provided in the form of a hopper assembly 36 adapted to contain masa dough M. Hopper 36 is of simple design and is positioned immediately above the closely adjacent rollers 18 and 20 so that the masa dough is continuously fed to the rollers by force of gravity. It is important to note that when the optimum peripheral speed ratio of the rollers is maintained, the corn dough will cleanly separate from the rear roller 20 and will adhere to the front roller 18. This unique result can be achieved solely by controlling the relative surface speeds of the rollers and no mechanical stripping devices need be used.

Also forming a part of the apparatus of the instant form of the invention is cutter means carried by the frame 16 for cooperation with first roller 18 to cut the planar sheet of masa dough 34 into segments having a predetermined configuration. As best seen in Figure 6, the cutter means is here provided in the form of a plurality of cutting molds 38 which are carried by a roller 39 which is disposed adjacent front, or first roller 18.

As indicated in Figures 4 and 5, cutter mold roller 39 includes a transversely extending shaft 39a which is rotatably driven by a gear 40 which in turn is driven by a gear 42 connected to shaft 26 proximate the opposite end thereof from reduction gear unit 24. With this construction motor 22 provides the driving force for rotatably driving the cutter mold roller 39 synchronously with front roller 18. The precise configuration of the cutter molds of the apparatus is similar to prior art cutter molds and in and of itself forms no part of the present invention. Accordingly a detailed description of the construction in operation of the cutter molds will not be provided. Suffice to say that as the sheet of masa dough 34 moves forwardly of the apparatus in the manner shown in Figure 6, the cutter molds will cut the planar sheet of masa dough into segments having a desired configuration. After the masa dough is cut into the end product configuration, it is stripped from the front roller 18 by a stripper wire 46 (Figure 6) and will fall by force of gravity onto a conveyer belt 48 of a suitable conveyer means carried by frame 16. The purpose of the conveyer means is to transport the product segments P from the proximity of the front roller to a remotely located cooking or packaging station. As best seen in Figure 3, stripper wire 46 preferably extends at an angle with respect to the transverse axis 47 of shaft 26 of roller 18. Experience has shown that when cylindrical rollers are used, the stripper wire functions best when it extends in a spiral fashion relative to roller 18 as shown in Figure 3, rather than extending parallel to the axis of rotation of the front roller.

As previously discussed herein, when the front and rear rollers of the prior art devices turned at the same rate of speed, the sticky masa dough tended to undesirably stick to the rear roller. This required the use of stripper wires, blades or other mechanical devices positioned adjacent the rear roller. The present inventors have discovered that if the peripheral speed of the front and rear rollers is closely controlled, so that the front roller has a peripheral speed of between 1.1 and 2.0 times greater than the peripheral speed of the rear roller, the masa dough will not stick to the rear roller. More particularly, experinece has shown that when cylindrical rollers of the same diameter are used, optimum processing conditions are achieved when the speed of rotation of the rear roller is approximately forty to eighty percent slower than the speed of rotation of the front roller.

Turning now to Figure 3A, an alternate form of roller assembly configuration is there shown. This roller assembly comprising first, or front roller 18a and second, or rear roller 20a, is usable in connection with apparatus of the character shown and takes the place of the roller assembly shown in Figure 3. In this alternate configuration roller 18a is convex while cooperating roller 20a is concave.

Experience has shown that when the rollers are configured as shown in Figure 3A the stripper wire, identified in Figure 3A by the numeral 46a, can be maintained in somewhat better contact with surface of front roller 18a than is the case with the earlier described cylindrical roller configuration. Further, when the convex front roller is used, the stripper wire 46a can be located in a plane generally parallel to the plane of the axis of rotation X of front roller 18a rather than being disposed in the spiral configuration shown in Figure 3. This feature permits each of the dough segments to be separated from the front roller at a constant height above the conveyer belt.

Referring to Figures 7 and 8, another alternate form of the apparatus of the invention is shown. This apparatus is generally similar to the apparatus illustrated in Figures 4 and 5 and like numerals are used to identify like components. In this alternate embodiment of the invention, rollers 18 and 20 are driven by a single motor rather than by two motors. More particularly, as indicated by broken lines 51, the driving motor (not shown) is suitably interconnected with a driven member, such as a sheave or gear 53, which is connected to shaft 26 of front roller 18. Gear 55, which is also connected to shaft 26, then drives a gear 57 connected to shaft 32 thereby imparting rotation to roller 20. Also mounted on shaft 26 is an inboard gear 59 which is adapted to drive a gear 61. Gear 61 is connected to the shaft 63 of the cutter mold roller 39 of this form of the invention and drives the cutter mold roller synchronously with front roller 18.

It is to be understood that by varying the sizes of gears 55 and 57, various peripheral speeds of rollers 18 and 20 can readily be achieved using a single driving motor. As previously discussed, the peripheral speed of the rear roller 20 is always less than the peripheral speed of the front roller 18. Experience has shown that for optimum results the peripheral speed of the front roller should be about 1.5 times that of the peripheral speed of the rear roller.

Various mechanical approaches well known to those skilled in the art can be used to provide rollers rotating at different rates of speed and to provide cooperating rollers, the peripheral rates of speed of which vary according to operational requirements.

Similarly sheeting rollers and cutter mold carrying rollers of varying size and configuration can be used without departing from the spirit of the present invention. Further, sheeting rollers having different surface characteristics can be used. For example, experience has shown that superior results can be achieved if the surface of the rollers is slightly rough rather than being perfectly smooth.

Turning to Figures 9, 10, 11 and 12, an alternate form of sheeting apparatus of the invention is there illustrated. Before discussing the details of construction of this alternate form of the invention, a brief review of the traditional method of making the Mexican tortilla is in order. From time immemorial, the Mexican people have made their tortillas by hand and cooked them in a very special manner. Critical to making a traditional, high quality table tortilla is formation of a perfectly round, uncooked tortilla which has a smooth surface free of breaks, pinholes and like imperfections and then cooking the tortilla in a three step process. The first cooking step consists of placing the uncooked tortilla on a hot surface (about 350° F) for a time period only long enough to heat seal the first heated surface (about 12 seconds). The second cooking step consists of turning the tortilla to heat and seal the second surface. The third, and last step, is to once again turn the tortilla so that the first surface is heated briefly. If the uncooked tortilla was properly made, the tortilla will now "blow" due to the steam trapped intermediate the first and second sealed surfaces. If the uncooked tortilla was improperly made, and the surfaces were imperfect, the internal steam will escape and not produce the skin which imparts the indicia of a high quality tortilla. If the tortilla will not "blow", the proper outer skin does not form and an unacceptable end product will result.

Until now all attempts to mechanically form the uncooked tortilla to produce the high quality table tortilla described in the preceding paragraphs, have failed. The earlier described prior art apparatus which embodied the stripper wire cooperating with the rear roller, could not produce an uncooked tortilla with properly sealed surfaces which would cause the tortilla to "blow" during a three step cooking process.

Another drawback of the prior art roller-stripper wire type apparatus resided in the fact that in high volume production, wherein four or more rows of tortillas were rolled simultaneously, the rollers would tend to separate slightly proximate their centers due to flexure so that the center row of tortillas were always slightly thicker than the tortillas formed proximate the edges of the rollers. When this apparatus was used with auxiliary automatic stacking and packaging devices, which stack by row, the tortillas at the center rows being thicker resulted in the center stacks being considerably heavier than the outboard stacks. So that all stacks would meet the prescribed minimum packaged weight, extra tortillas would have to be added to the outboard stacks. With the passage of time, this resulted in substantial loss of profits.

In an effort to solve the aforementioned thickness and surface sealing problems, several prior art equipment manufactures experimented with machines which extruded the masa dough rather than rolling it, thereby avoiding the thickness variations and the use of the stripper wires. However, this process undesirably produced elliptical rather than round tortillas which presented both appearance and packaging problems. Additionally, the complexity, cost and unreliability of these types of machines made their use in high volume tortilla production impractical.

The apparatus of the invention shown in Figures 9-12 uniquely solves both the thickness and surface sealing problems inherent in tortillas made using the prior art devices. In what appears simple after the fact, the high volume production of traditional, high quality Mexican table tortillas was made possible for the first time by adding a third auxiliary roller to the apparatus previously described herein and illustrated in Figures 1-8.

Turning particularly to Figures 10 through 12, the apparatus of this alternate form of the invention is similar in many respects to the apparatus shown in Figures 4, 5, and 6 like numbers are used to identify like components. The embodiment of the invention shown in these Figures comprises a front, or first, generally cylindrical roller 18 (Figure 11) rotating in a first direction, and second, or rear, generally cylindrical roller 20, rotating in a second opposite direction. As in earlier embodiment of the invention, the rollers spaced apart by a distance approximately equal to the desired thickness of the tortilla. This embodiment of the invention also includes a third roller 70 which rotates in the second direction. Drive means are provided for rotating the first, second and third rollers. The first and second rollers are rotated by the drive means in a manner such that the surface, or peripheral speed of the first, or front, roller 18 is greater than the surface speed of the second or rear roller 20.

As best seen by referring to Figure 10, the drive means is similar to that shown in Figure 5 and comprises a first variable speed electric motor 22 connected to a suitable gear reduction unit 24 which in turn drives transverse shaft 26 of first roller 18. In a manner presently to be described, motor 22 also drives third roller 70. The drive means also comprises a second variable speed electric motor 28 connected to a second gear reduction unit 30 which in turn drives transverse shaft 32 of second or rear roller 20. With this arrangement it is apparent that variable speed motors 22 and 28 can be controlled to independently vary the speed of rotation of rollers 18 and 20 to obtain an optimum peripheral speed ratio between the two rollers.

Referring to Figure 11, the apparatus of this embodiment of the invention, like the earlier described form, includes means for delivering masa, or corn flour, dough to the first and second rollers whereby the masa dough can be compressed between the rollers to form a thin planar sheet of dough 34. As indicated in Figure 11, this means is here provided in the form of a hopper assembly 36 of identical construction to that previously described adapted to contain masa dough M. Once again, it is important to note that when the optimum peripheral speed ratio of the rollers is maintained, the corn dough will cleanly separate from the rear roller 20 and will adhere to the front roller 18. This unique result can be achieved solely by controlling the relative surface speeds of the rollers and no mechanical stripping devices need be used.

Also forming a part of the apparatus of this alternate form of the invention is cutter means carried by the frame 16 for cooperation with first roller 18 to cut the planar sheet of masa dough 34 into segments having a predetermined configuration. The cutter means are of identical construction to that previously described and include a cutter mold roller 39 having a transversely extending shaft 39a which is rotatably driven by a gear 40 (Figure 9) which in turn is driven by a gear 42 connected to shaft 26 proximate the opposite end thereof from reduction gear unit 24. With this construction motor 22 provides the driving force for rotatably driving the cutter mold roller 39 synchronously with front roller 18.

This roller 70 also includes a transversely extending shaft 70a which is driven by a gear 72, which in turn is driven by gear 42 connected to shaft 26 proximate the end thereof opposite from reduction gear unit 24. It is apparent that with this construction motor 22 provides the driving force for both cutter mold roller 39 and third roller 70. It is also apparent that with this arrangement, third roller 70 will rotate in the opposite direction from that of first roller 18 and in the same direction as second roller 20 Figure 11). The gearing is such that the first and third rollers will rotate at precisely the same surface speed.

As previously mentioned when the length of shafts 26 and 32 are sufficient to enable four tortillas to be cut simultaneoulsy, a certain amount of flexure of the shafts is unavoidable causing the strip of dough 34 to be undesirably slightly thicker proximate the center of the first and second rollers. Also, as previously mentioned, the surface of the roller 20 is preferably roughened to aid in dough separation. This results in the formation of a somewhat rough surface on the sheet of masa dough. To correct both the surface roughness and the transverse variation in thickness of the sheet of masa dough, third roller 70 is strategically constructed and arranged. More particularly, roller 70 is spaced from roller 18 a distance "D", slightly less than the distance between rollers 18 and 20, so as to substantially remove any variations in wall thickness of sheet 34 which might exist due to flexure of rollers 18 and 20 (Figure 12). Additionally, roller 70 is provided with a smooth surface preferably made from a synthetic fluorine containing resin of the character manufactured and sold under the trademark TEFLON. This smooth surface acting against the masa sheet tends to seal it and remove pinholes and surface defects which might exist. Accordingly, the masa sheet at 34a (Figure 11) preparatory to being cut by the cutter molds is substantially of uniform thickness along its width and also has a surface ideally suited for three-step cooking to make a superior table quality Mexican tortilla. Separation of the tortillas from roller 18 is accomplished in the same manner as previously discussed using a stripper wire 46.

Having now described the invention in detail in accordance with the requirements of the patent statutes, those skilled in this art will have no difficulty in making changes and modifications in the individual parts or their relative assembly in order to meet specific requirements or conditions. Such changes and modifications may be made without departing from the scope and spirit of the invention, as set forth in the following claims.

## Claims

1. An apparatus for forming masa dough into a planar sheet, comprising:

(a) a first roller rotating in a first direction;

(b) a cooperating second roller disposed adjacent said first roller and rotating in a second direction;

(c) means for delivering masa dough between said first and second roller; and

(d) drive means for rotatably driving said first and second rollers in a manner such that the masa dough is formed into a planar sheet which cleanly separates from said second roller and adheres only to said first roller.

2. An apparatus as defined in Claim 1 in which said first and second rollers are driven by said drive means such that the peripheral speed of said first roller is between 1.1 and 2.0 times greater than the peripheral speed of said second roller.

3. An apparatus as defined in Claim 4 in which said first and second rollers are generally cylindrical.

4. An apparatus as defined in Claim 3 in which said first and second rollers are of substantially the same diameter and in which said first roller is rotated at a greater rate of speed than the speed of rotation of said second roller.

5. An apparatus as defined in Claim 4, in which said speed of rotation of said second roller is between approximately forty and eighty percent slower than the speed of rotation of said first roller.

6. An apparatus for forming masa dough, comprising:

(a) a frame,

(b) a first roller rotatably mounted on said frame,

(c) a second roller rotatably mounted on said frame in close proximity with said first roller, the peripheral speed of said second roller being less than the peripheral speed of said first roller; and

(d) means for delivering masa dough to said first and second rollers, whereby said masa dough is compressed between said rollers to form a thin planar sheet of dough adhering only to said first roller.

7. An apparatus as defined in Claim 6 including cutter means cooperatively associated with said first roller for cutting said planar sheet of masa dough into segments.

8. An apparatus as defined in Claim 7 including stripper means carried by said frame proximate said first roller for separating said segments from said first roller.

9. An apparatus as defined in Claim 8 in which said stripper means comprises a length of wire disposed in close proximity with the surface of said first roller.

10. An apparatus as defined in Claim 9 further including conveyer means carried by said frame for conveying said segments away from said first roller.

11. An apparatus as defined in Claim 9 in which said first and second rollers are generally cylindrical.

12. An apparatus as defined in Claim 9, in which the surface of said first roller is convex.

13. An apparatus as defined in Claim 9, including first drive means for driving said first roller at a predetermined, variable rate of speed.

14. An apparatus as defined in Claim 13 including second drive means for driving said second roller at a predetermined variable rate of speed.

15. An apparatus for manufacturing a Mexican food product from masa dough, comprising:

(a) a frame;

(b) a first, generally cylindrical roller rotating in a first direction;

(c) a second, generally cylindrical roller rotating in a second direction;

(d) drive means for rotating said first and second rollers in a manner such that the surface speed of said first roller is greater than the surface speed of said second roller;

(e) means for delivering masa dough to said first and second rollers whereby said masa dough is compressed between said first and second rollers to form a thin planar sheet of dough adhering only to said first roller;

(f) cutter means carried by said frame for cooperation with said first roller to cut said planar sheet of dough into segments having a predetermined configuration; and

(g) means carried by said frame for separating said segments from said first roller.

16. An apparatus as defined in Claim 15 in which said first and second rollers are cylindrical and are of approximately the same diameter.

17. An apparatus as defined in Claim 16 in which said drive means drives said first roller at a greater rate of speed than said second roller.

18. An apparatus for manufacturing a Mexican food product from masa dough, comprising:

(a) a frame;

(b) a first, generally cylindrical roller rotating in a first direction;

(c) a second, generally cylindrical roller rotating in a second direction;

(d) a third generally cylindrical roller, disposed proximate said first roller and, rotating in a second direction;

(e) a first drive for rotating said first and third rollers at the same rate of speed;

(f) a second drive for rotating said second roller in a manner such that the surface speed of said first roller is greater than the surface speed of said second roller;

(g) means for delivering masa dough to said first and second rollers whereby said masa dough is compressed between said first and second rollers to form a thin planar sheet of dough adhering only to said first roller;

(h) cutter means carried by said frame for cooperation with said first roller to cut said planar sheet of dough into segments having a predetermined configuration; and

(i) means carried by said frame for separating said segments from said first roller.

19. An apparatus as defined in Claim 18 in which said first and second rollers are cylindrical and are of approximately the same diameter.

20. An apparatus as defined in Claim 18 in which said third roller is disposed intermediate said second roller and said cutter means.

21. An apparatus as defined in Claim 18 in which said third roller is positioned relative to said first roller so as to compress the layer of dough adhering to said first roller in a manner to cause the thickness thereof to become substantially constant transversely of said layer of dough.

22. An apparatus as defined in Claim 21 in which the surface of said third roller is very smooth and constructed from a synthetic fluorine containing resin, whereby the surfaces of the masa dough, passing between said first and third rollers, will be rendered substantially free of pin holes.

23. An apparatus as defined in Claim 21, in which said first, second and third rollers are generally cylindrical and in which said third roller has a diameter substantially smaller than the diameter of said first roller.

24. An apparatus as defined in Claim 21 in which the surface of said second roller is spaced from the surface of said first roller by a distance slightly less than the distance between the surfaces of said first and second roller, whereby any transverse variation in thickness of the sheet of masa dough adhering to said first roller will be eliminated.

*FIG.1*
PRIOR ART

MASA

FRONT ROLLER

REAR ROLLER

WIRE

BAND

WR

WIRES

12

PRODUCT

CUTTING + MOLD

W

C

W

WR

*FIG.2*
PRIOR ART

18

46

47

26

*FIG.3*

32

20

46a

18a

26

X — X

*FIG.3A*

32

20a

*FIG.4*

*FIG.5*

FIG.6

FIG.7

FIG.8

_FIG. 9_

_FIG. 10_

FIG. 11

FIG. 12